# EUROPEAN PATENT SPECIFICATION

(11) **EP 0 798 199 B1**
(45) Date of publication and mention of the grant of the patent: **27.11.2002**
(21) Application number: 97500056.3
(22) Date of filing: 24.03.1997
(51) Int. Cl.: B62D 53/06, B60P 3/42

(54) **Improved vehicle**
Fahrzeug
Véhicule

(30) Priority: 27.03.1996 ES 9600800 U
(43) Date of publication of application: 01.10.1997
(73) Proprietor: Lara Peinado, Fernando, 18110 Las Gabias (Granada) (ES)
(72) Inventor: Lara Peinado, Fernando, 18110 Las Gabias (Granada) (ES)
(74) Representative: Isern Jara, Nuria

(56) References cited:
- GB-A- 2 088 294
- US-A- 4 702 510
- US-A- 4 969 690

## Description

### OBJECT OF THE INVENTION

The present application refers to a truck of the rigid or tractive head having a body with collapsible sides and an extensible rear cantilever allowing that several lengths can be accommodated in the same truck, so that it can be operated as a tractive head and as an opened body rigid truck; the body is closed when a closed body type is decided to be fitted or as a chassis, so that said operating modes can be obtained in a single truck.

### BACKGROUND OF THE INVENTION

Presently in the market can be found some trucks having a tractive head and a fixed length platform or a closed or opened body, bearing a removable truck bed, so that for each operating mode the pertinent bed must be purchased.

US-A-4,969,690 describes a tractor trailer quick-change apparatus in which the platform is not extensible, side members are not provided, and the truck bed is always unchangeable as a unit. This document shows the features of the preamble of claim 1.

US-A-4,702,510 discloses a flat bed non modifiable in size or shape, a kingpin locking device provided retaining the flat bed, and means to secure the load on the bed.

UK-A-2,088,294 refers to a road goods vehicle in which a box-shaped bed is removably fixed, while the trailer is to remain stationary for loading or unloading.

### DESCRIPTION OF THE INVENTION

The vehicle object of the present invention comprises a truck of the tractive head type wherein the tractive head is provided with a fixed or movable chassis linked to the truck underframe by conventional means.

This chassis linked to the tractive head has an extensible area which can be moved through some side frames or other means performing the function of sliders. Also a resting system can be fitted with bearings or with any other resting device to ease the move of the extensible area.

The chassis rear side is inserted beneath or above the fixed chassis by using articulating mechanisms with one or several hydraulic telescopic cylinders optionally drawing out and inserting the chassis rear cantilever.

The device to move the chassis rear side can be of any type whatsoever, either mechanical or manual, hydraulical, pneumatical or hydropneumatical.

As to the engine driving said devices, it can be of any type whatsoever, either electrical or explosion, internal combustion engines with take-off in the gearbox or of any other type whatever.

The device can also be manual, by means of a rotating lever or any other type providing a drive.

The chassis movable side can manually be operated or mechanically or with any other suitable means.

Likewise, the chassis rear movable side (3) of the body can manually be detached or with any other means so that it remains fully detached from the tractive head (1), and it can be folded with hinges or any other devices, even a section thereof can be collapsed, so that it remains hanging from the fixed chassis as its rear side.

The body sides are collapsible with hinges or with any other hydraulic, mechanical, etc. devices and can be fully detached by any operating devices and manually collapsed or using any other suitable means.

In this way, a tractive head and a closed or opened body rigid truck is achieved.

With this arrangement, the hitching or "fifth wheel" of the vehicle can be fixed or detachable with any operating device.

In a preferred embodiment, the truck has two trailer hitchings at its rear side, one for heavy duty trailers and another for lightweight trailers.

The advantage of this device coupled to the truck is that a multiple use as tractive head (1) and closed or opened body rigid truck and as a chassis with a fixed or detachable fifth wheel and hitchings for heavy duty and lightweight trailers can be allowed.

To enlarge still more the description now being made and with the purpose to aid in the understanding of its features, the present specification is accompanied by a set of drawings which figures illustratively and non-exhaustively show the invention's most remarkable details.

### BRIEF DESCRIPTION OF THE DRAWINGS

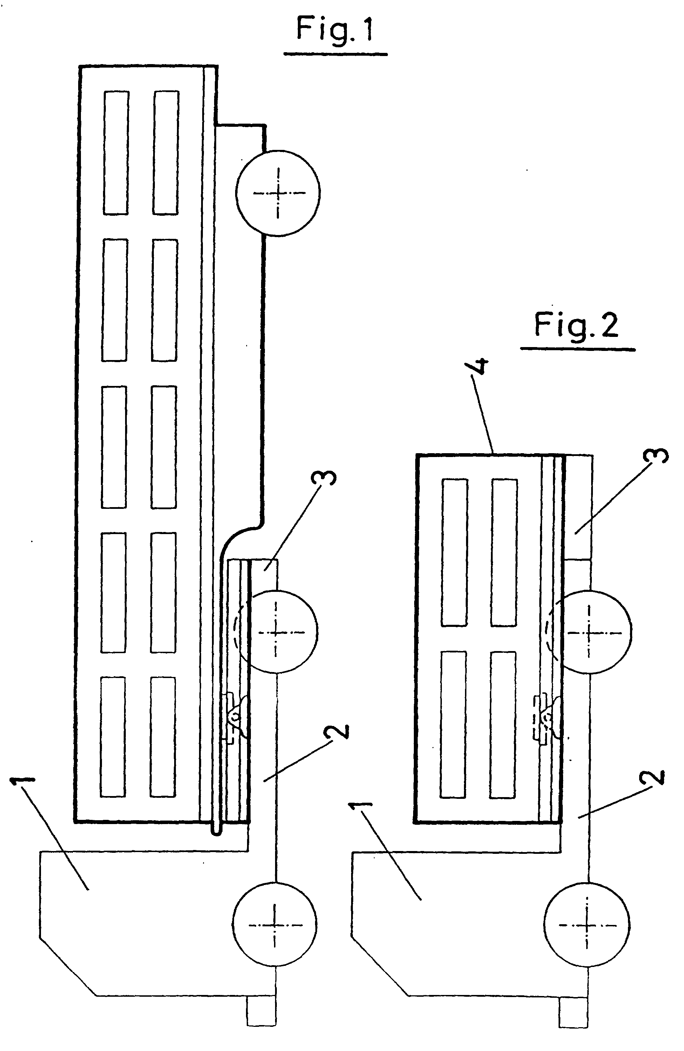

Figures 1 and 2 show respective diagrammatically side views illustrating two different arrangements of a practical embodiment of a vehicle according to the invention.

### DESCRIPTION OF THE PREFERRED EMBODIMENT

Upon reviewing said figures and according to the adopted numbering, an invention's preferred embodiment can be appreciated therein, which embodiment shows a truck with a tractive head (1) provided with a chassis (2), at its rear side (3) being extensible by means of side frames or the like, also some collapsible side members (4) being arranged using hinges so that this arrangement allowed to obtain a chassis or a closed or opended body rigid truck.

Figure 1 shows the truck performing the function of a tractive head with the extensible portion (3) in a retracted position being inserted beneath the fixed chassis (2) and with the side members already collapsed.

Figure 2 shows the same vehicle performing the function of an opened body truck, although it can also be closed if a platform type or a closed body type is decided to be fitted.

In the figure 2, the side members (4) are vertically located to make up for the body, while the extensible or movable portion (3) of the chassis (2) is fully extended although it can also be extended up to the lenght deemed as more apppropriate.

## Claims

1. Vehicle, made up with a truck provided with a tractive head (1) wherein a chassis (2) joined to the truck underframe has been fitted by conventional linking means, bearing a removable quick-change truck bed,
**characterized in that**
said chassis (2) has its rear side (3) fitted to be extended in a cantilever position through bearing-fitted side frames or other means capable of operating as sliders;
the extensible portion (3) is suitable to be placed above or beneath the fixed chassis (2) by using conventional articulating mechanisms;
said chassis (2) is provided with side members (4) thereon, which are collapsible by using hinges or the like;
said vehicle being suitable for conversion into an opened or closed body rigid truck by fitting a covering at the chassis (2) or at the body upper portion.

## Patentansprüche

1. VERBESSERTES FAHRZEUG, bevorzugt bestehend aus einem LKW mit einem Zugkopf (1), der eine mit herkömmlichen Verankerungsmitteln mit dem Chassis verbundene Plattform (2) aufweist, im wesentlichen **dadurch gekennzeichnet, dass** diese Plattform ein Heckteil (3) aufweist, das über mit Lagern oder anderen geeigneten Mitteln mit Schiebefunktion versehene Längsträger fliegend ausziehbar ist, dass dieses ausziehbare Teil (3) oberhalb oder unterhalb der ortsfesten Plattform (2) positioniert werden kann und die Plattform (2) mittels Scharnieren oder dergleichen hochklappbare Seitenteile (4) aufweist, wobei aus diesem Fahrzeug ein starrer LKW mit offenem oder geschlossenem Aufbau gemacht werden kann, indem eine Abdeckung an der Plattform (2) bzw. am oberen Teil des Aufbaus angebracht wird.

## Revendications

1. VÉHICULE PERFECTIONNÉ, composé de préférence d'un camion pourvu d'un tracteur sur lequel a été installée une plate-forme unie au châssis de celui-ci par des dispositifs d'ancrage traditionnels, **caractérisé** principalement par une plate-forme dont l'arrière est extensible en porte à faux par l'intermédiaire de longerons munis de coussinets, ou autres moyens pouvant faire office de coulisses, ce qui fait que cette partie extensible est apte pour être placée au-dessus ou au-dessous de la plate-forme fixe ; sur cette plate-forme sont également prévus des côtés rabattables sur elle-même grâce à des charnières ou similaires. Ce camion est donc apte pour être converti en un camion rigide à caisse ouverte, ou fermée, en installant une fermeture dans le haut de la caisse, ou du plateau.
